# FASCICULE DE BREVET EUROPEEN

(11) **EP 0 665 416 B1**
(45) Date de publication et mention de la délivrance du brevet: **20.05.1998**
(21) Numéro de dépôt: 95400179.8
(22) Date de dépôt: 27.01.1995
(51) Int. Cl.: G01B 7/30, G01D 5/14

(54) **Capteur magnétique de position à sonde de hall**
Magnetischer Lagesensor mit Hallsonde
Magnetic position sensor with Hall-element

(30) Priorité: 01.02.1994 FR 9401073
(43) Date de publication de la demande: 02.08.1995
(73) Titulaire: MOVING MAGNET TECHNOLOGIES S.A., 25000 Besançon (FR)
(72) Inventeur: Oudet, Claude, F-25000 Besancon (FR); Prudham, Daniel, F-25220 Thise (FR)
(74) Mandataire: Pernez, Helga

(56) Documents cités:
- WO-A-92/10722
- DE-A- 4 215 641
- US-A- 4 966 041

## Description

La présente invention concerne un capteur magnétique de position du type comportant un aimant permanent mince de forme tubulaire aimanté radialement, solidaire d'un axe d'accouplement. L'aimant permanent est mobile en rotation dans un entrefer principal cylindrique défini par une culasse et un stator en un matériau magnétique doux. Le stator présente un entrefer secondaire dans lequel est logée une sonde de Hall.

Un tel capteur est décrit dans la demande de brevet français FR2670286 de la demanderesse. Il présente un avantage important par rapport à des capteurs à sonde de Hall de l'art antérieur divulgués par exemple par le brevet US3194990 ou le brevet DE2923644 car il permet d'obtenir un signal de sortie pratiquement proportionnel à la position angulaire, avec une erreur de linéarité aisément inférieure à 0,2%, alors que les capteurs de l'art antérieur nécessitent des circuits électroniques de linéarisation du signal, leur réponse étant généralement de type sinusoïdal.

Il est toutefois apparu que dans certaines applications nécessitant une miniaturisation poussée, ou destinée à un fonctionnement dans des ambiances magnétiquement perturbées, la sonde de Hall détecte des champs magnétiques parasites qui viennent perturber la mesure de la position angulaire.

L'objet de la présente invention est de remédier à cet inconvénient en proposant un mode de réalisation réduisant sensiblement l'incidence de champs magnétiques parasites sur la qualité du signal de sortie.

Un autre but de l'invention est de proposer un mode de réalisation permettant de réduire le nombre de pièces mécaniques et de réduire les dimensions du capteur sans affecter sa robustesse.

Ces résultats sont obtenus par l'invention relative à un capteur dont le stator est disposé coaxialement à l'intérieur de l'aimant permanent; la culasse assurant la fermeture du flux magnétique engendré par l'aimant permanent et formée par une pièce tubulaire coaxiale avec l'aimant et le rotor.

La culasse extérieure réalise une double fonction :
- d'une part elle ferme le flux magnétique engendré par l'aimant permanent et sortant par les pôles situés sur sa surface extérieure ,
- d'autre part, elle forme un écran contre les champs magnétiques parasites.

Ce mode de réalisation permet donc de durcir de manière significative, sans pièce supplémentaire et sans surcoût, le capteur à l'encontre des perturbations magnétiques extérieures.

Avantageusement, l'aimant permanent est solidaire de la culasse, ladite culasse étant solidaire de l'axe d'accouplement.

La culasse est dans ce cas mobile, et augmente légèrement l'inertie du capteur. Elle présente néanmoins une fonction supplémentaire consistant à renforcer mécaniquement l'aimant permanent, qui est généralement constitué par un matériau relativement fragile.

Selon un mode de réalisation préféré, la culasse présente une partie tubulaire dont la surface intérieure est en contact avec la totalité de la surface extérieure de l'aimant permanent et qui se raccorde à une flasque transversale pour la liaison avec l'axe d'accouplement. De préférence, la flasque est située à une distance suffisante de l'aimant et du stator pour ne pas influencer la distribution de champ, et/ou est réalisée en un matériau non magnétique. Cette distance est par exemple de l'ordre de 2 millimètres pour un aimant d'un diamètre de 22 millimètres.

La culasse entoure ainsi complètement l'aimant permanent et le stator.

Avantageusement, l'aimant permanent est collé dans la culasse.

Selon une variante préférée, le stator est surmoulé dans un boîtier fixe présentant un alésage axial formant un palier pour l'axe d'accouplement. De préférence, le stator est constitué par deux pièces en un matériau magnétique doux en forme de cylindre semi-tubulaire, positionnées au surmoulage par exemple par deux cavités de positionnement dans le boîtier fixe.

Cette variante permet d'éviter le recours à un palier est permet donc de réduire le coût des composants et de simplifier l'assemblage.

Avantageusement, le boîtier de surmoulage du stator présente une gorge pour la mise en place de l'aimant permanent et de la culasse en matériau magnétique doux extérieur, et se prolonge par une partie annulaire extérieure coaxiale, d'un diamètre intérieur au moins égal au diamètre extérieur de ladite culasse, ladite partie tubulaire étant prolongée par au moins une patte de fixation.

Selon une variante spécifique, le boîtier présente une cavité pour le logement d'une sonde de Hall dans l'entrefer secondaire, le boîtier présentant à sa partie frontale arrière un logement pour un circuit électronique de traitement des signaux générés par la sonde de Hall.

De préférence, la longueur de l'aimant est inférieure à la longueur du stator d'une valeur comprise entre E et 2E, E désignant la largeur de l'entrefer, afin de réduire l'influence d'un jeu axial.

L'invention sera mieux comprise à la lecture de la description qui suit, faisant référence aux dessins annexés, où :
- la figure 1 représente une vue en coupe médiane d'un premier exemple de réalisation d'un capteur selon l'invention ;
- la figure 2 représente une vue en coupe transversale dudit capteur ;
- les figures 3 et 4 représentent des vues en coupe respectivement médiane et transversale d'un second exemple de réalisation d'un capteur selon l'invention ;
- la figure 5 représente une vue en coupe médiane d'un troisième exemple de réalisation d'un capteur selon l'invention ;
- la figure 6 représente une vue schématique des lignes de flux magnétiques
- la figure 7 représente le schéma de principe d'un exemple de réalisation d'un circuit électroniques de traitement du signal selon l'état de la technique ;
- la figure 8 représente le schéma de principe d'un exemple de réalisation d'un circuit électroniques de traitement du signal délivré par le capteur conforme à l'invention.

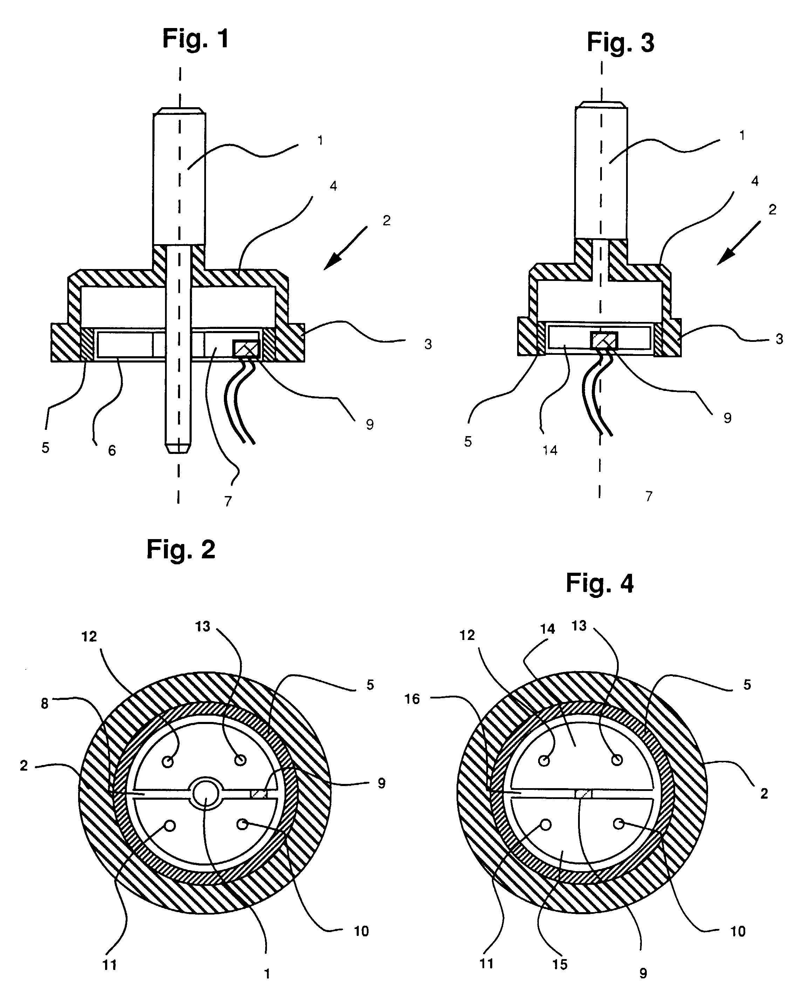

La figure 1 représente une vue en coupe médiane d'un premier mode de réalisation de l'invention.

Le capteur décrit à titre d'exemple non limitatif en référence à la figure 1 est accouplé à un axe d'entraînement (1) dont on veut mesurer la position angulaire. Une culasse (2) est solidaire de cet axe (1). La culasse est réalisée en un matériau magnétique doux, par exemple en fer doux. Elle présente une partie tubulaire (3) et une flasque frontale (3) pour la liaison avec l'axe d'accouplement (1). A l'intérieur de la partie tubulaire (3) de la culasse (2) est collé un aimant permanent (5). Cet aimant (5) est constitué par un élément tubulaire aimanté radialement. Il présente une première partie en forme de tuile aimantée dans un sens, par exemple présentant un pole NORD vers l'extérieur et le pôle SUD vers l'intérieur, et une deuxième partie opposée par rapport au plan médian présentant le pôle SUD vers l'extérieur et le pole NORD vers l'intérieur.

La culasse (2) et l'aimant (5) sont mobiles en rotation par rapport à un stator fixe (6, 7) logé à l'intérieur de l'aimant tubulaire (5).

Dans le premier mode de réalisation décrit, le stator (6, 7) est de forme tubulaire, et présente un trou central (7) pour le passage de l'extrémité de l'axe (1). Il est constitué par un paquet de tôles empilées en fer-nickel ou en fer-silicium.

Le stator (6, 7) présente un entrefer secondaire (8) s'étendant selon un plan radial, comme représenté sur la figure 2. Une sonde de Hall (9) est logée dans cet entrefer secondaire (8).

Le stator (6, 7) est constitué de deux pièces positionnées par des goupilles s'insérant dans les trous (10 à 13) et dans une platine de référence fixe, ou par surmoulage. Pendant le surmoulage, des goupilles sont introduites dans ces alésages pour maintenir les deux constituants en place.

Les figures 3 et 4 représente un second mode de réalisation, différent du premier mode de réalisation par la forme du stator.

Le stator (6, 7) est constitué de deux demi cylindres (14, 15) définissant entre eux un entrefer secondaire (16) dont les faces sont symétriques par rapport au plan médian (17) passant par l'axe central (1).

L'axe (1) ne traverse pas le capteur. Il est guidé par un palier faisant partie intégrante du dispositif dont on veut connaître la position angulaire.

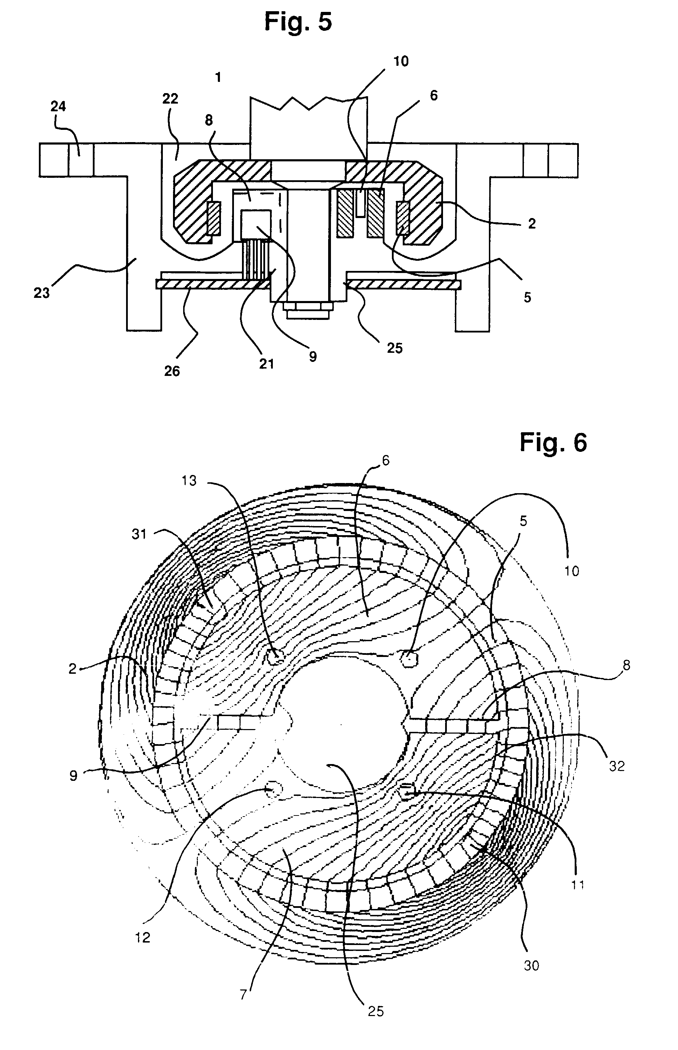

La figure 5 représente une troisième variante de réalisation, correspondant à la forme de stator décrite en relation avec le premier mode de réalisation.

Le boîtier de surmoulage (20) du stator (6, 7) présente une partie tubulaire intérieure (21) dans laquelle est logée le stator, puis une gorge (22) à l'intérieur de laquelle se déplace la culasse (2) et l'aimant (5), puis une deuxième partie tubulaire (23) prolongée par des pattes de fixation (24). La partie tubulaire centrale (21) est percée par un alésage (25) formant un palier pour l'axe d'accouplement (1). La partie frontale arrière du boîtier présente un logement cylindrique pour un circuit imprimé (26) supportant les composants électroniques et la connectique. Les fils de sortie de la sonde de Hall (9) sont directement soudés sur le circuit imprimé (25).

La figure 6 représente de manière schématique les lignes de flux engendrés par l'aimant permanent (5).

L'aimant permanent (5) est un aimant de préférence en Samarium-Cobalt 2-17 de forme tubulaire, présentant deux transitions magnétiques (30, 31) diamétralement opposées. Le diamètre extérieur de l'aimant est de 22 millimètres et son épaisseur mesurée radialement, selon le sens de l'aimantation, est de 1,25 millimètres. Il se déplace dans un entrefer principal (32) d'une largeur de 1,75 millimètres.

L'aimant (5) est fixé sur une culasse de forme tubulaire présentant un diamètre extérieur de 28 millimètres et un diamètre intérieur de 22 millimètres.

Le stator (6, 7) de forme générale tubulaire de diamètre extérieur de 18,5 millimètres et d'un diamètre intérieur de 8 millimètres, est constitué de deux pièces identiques en forme de cylindre à section semi-circulaire, formant entre elle un entrefer secondaire (8) d'une largeur de 0,8 millimètres.

Dans la position représentée en figure 6, l'axe passant par les transitions magnétiques (30, 31) de l'aimant forme avec l'axe passant par l'entrefer secondaire (8) un angle de 40 degrés.

Les lignes de champs générées par l'aimant (5) sont symétriques par rapport à l'axe de rotation. Elles se referment sans fuite à travers la culasse extérieure (2) dont la section doit être suffisante pour laisser passer tout le champ magnétique, et à travers le stator (6, 7). Le stator étant entrecoupé par un entrefer secondaire (8), la sonde de Hall qui y est logée est traversée par un champ dont l'amplitude est directement fonction de la position relative des transitions magnétiques (30, 31) par rapport à celle de l'entrefer secondaire (8). Lorsque le plan passant par les transitions magnétiques (30, 31) de l'aimant et confondu avec le plan passant par l'entrefer secondaire (8), le flux traversant la sonde de Hall est maximum. Par contre, lorsque les deux plans sont perpendiculaires, le flux traversant la sonde de Hall est nul.

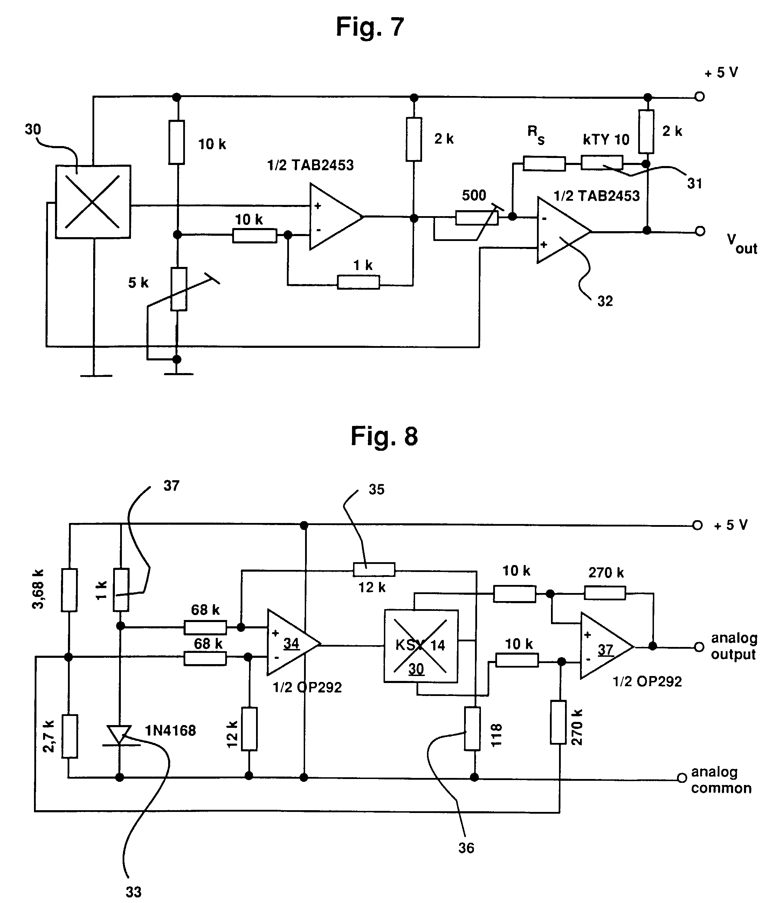

La figure 7 représente le schéma de principe d'un exemple de réalisation d'un circuit de traitement du signal généré par un capteur de position selon l'invention.

Divers circuits sont connus, voire conseillés par des fabricants de sonde de Hall, pour amplifier le signal de la sonde de Hall et effectuer une compensation du coefficient de température de la sensibilité de la sonde. La sonde de Hall (30), commandée en tension, est compensée en température par une thermistance (31) placée dans le circuit de contre-réaction de l'amplificateur de sortie (32). L'amplificateur de sortie est constitué dans l'exemple décrit par l'un des circuits TAB2453.

Dans l'automobile, en plus d'un fonctionnement dans une large gamme de température (-40°C à + 103°C au moins sous le capot), il y a un besoin de fonctionner sous 5V et de fournir un signal de sortie variant d'une valeur inférieur proche de 0V à une valeur supérieure proche de 5V. Il existe des circuits intégrés dit "rail to rail" qui satisfont à cette dernière exigence. La difficulté consiste à réaliser la compensation de température non seulement de la sonde de Hall mais aussi de l'aimant, sans détériorer l'étendue du signal de sortie et en gardant dans la sonde le courant maximal iₘₐₓ permis par la plus haute résistance interne de sonde Rₘₐₓ à la température la plus critique, soit i max peu inférieur à 5/Rmax. Il faut donc avoir en série avec la sonde la plus faible résistance possible.

Les résultats obtenus avec les circuits connus n'ayant pas été satisfaisants, on a développé un circuit mieux adapté, représenté en figure 8.

La sonde de Hall (30) est commercialisée par la SIEMENS sous la référence KSY14. Elle présente un coefficient de -0,05%K. L'aimant permanent est commercialisé par la société SHIN ETSU sous la référence R6 et présente un coefficient de -0,04%K.

Le coefficient de température total qu'il convient de compenser est de -0,09%/K pour que la température n'entraîne pas d'erreur de la mesure de position angulaire.

La sensibilité d'une sonde de Hall est fonction linéaire de son courant d'alimentation. La correction de température met en oeuvre une diode au silicium (33) utilisée comme capteur de température. Le coefficient de température est de l'ordre de -1,65mV/K pour une tension directe de 0,6V à 20°C. Cette diode (33) est disposée à l'entrée de l'amplificateur opérationnel (34) qui commande en courant la sonde de Hall (30) et sert encore à moduler le courant en fonction de la température afin de changer la sensibilité de la sonde de Hall (30). Pour compenser quelques dérives autres que celles de la sonde de Hall (30) et de l'aimant, on cherche à compenser un coefficient globale de 0,113%/K.

La tension à l'entrée non inverseuse du premier amplificateur (34) est fixée par deux résistances (35, 36) en série et donne une référence de 2,11V. L'amplificateur (34) est constitué par l'un des deux amplificateurs intégrés dans le même boîtier d'un circuit OP292)

La tension sur l'entrée inverseuse est donnée par une résistance (37) en série avec la diode.

Cette résistance est fixée pour obtenir 0,6V à 20°C.

Le gain de l'amplificateur opérationnel est de 12000/68000=0,1765. La tension sur la résistance (36) de 118Ω de contrôle du courant est de (2,11-0,6) ∗ 0,1765=0,266V et le courant de 0,266/118=0,00225 A.

A 130°C la tension de la diode (33) est de 0,6(1-110∗0,00165)=0,418V. Le courant dans la sonde de Hall (30) est alors (2,11-0,418)∗0,1765/118=0,00253A.

L'amplificateur (34) délivre alors une tension de sortie de 3,93V; il y a encore de la marge par rapport à la tension maximale acceptable pour tenir compte de la résistance maximale de sonde de Hall (30) susceptible de se rencontrer dans une fabrication de série.

Le coefficient de température de la compensation, calculé pour la variation considérée de 110°C, est de (2,53-2,25)/2,25/110∗100=+0,113%/K, ce qui compense exactement le coefficient à corriger. Il est clair que l'adaptation des résistances permet de s'ajuster à d'autres valeurs à compenser.

Le deuxième amplificateur (37) permet d'obtenir l'étendue de mesure recherchée par ajustement de la résistance fixant le gain, soit 270KΩ dans la figure.

L'invention est décrite dans ce qui précède à titre d'exemple non limitatif.

## Revendications

1. Capteur magnétique de position du type comportant un aimant (5) permanent mince de forme tubulaire aimanté radialement, solidaire d'un axe d'accouplement, ledit aimant permanent (5) étant mobile en rotation dans un entrefer principal cylindrique défini par une culasse (2) et un stator en un matériau magnétique doux, le stator (6, 7) présentant un entrefer secondaire (8, 16) à l'intérieur duquel est disposé un sonde de Hall (9) caractérisé en ce que le stator est disposé coaxialement à l'intérieur de l'aimant permanent (5), et en ce que la culasse (2) assurant la fermeture du flux magnétique engendré par l'aimant permanent est formée par une pièce tubulaire coaxiale avec l'aimant (5) et le rotor (6, 17).

2. Capteur magnétique de position selon la revendication 1 caractérisé en ce que l'aimant (5) permanent est solidaire de la culasse (2), ladite culasse (2) étant solidaire de l'axe d'accouplement.

3. Capteur magnétique de position selon la revendication 1 ou selon la revendication 2 caractérisé en ce que la culasse (2) présente une surface intérieure en contact avec la totalité de la surface extérieure de l'aimant permanent (5), ladite partie tubulaire étant raccordée à une flasque transversale pour la liaison avec l'axe d'accouplement.

4. Capteur magnétique de position selon la revendication 3 caractérisé en ce que l'aimant (5) permanent est collée dans la culasse (2).

5. Capteur magnétique de position selon l'une quelconque des revendications 1 à 4 caractérisé en ce que le stator (6, 7) est constitué par deux pièces en un materiau magnétique doux en forme de tuile, présentant au moins deux cavités de positionnement dans le boîtier fixe.

6. Capteur magnétique de position selon l'une quelconque des revendications précédentes caractérisé en ce que le stator (6, 7) est surmoulé dans un boîtier fixe présentant un alésage axial formant un palier pour l'axe d'accouplement.

7. Capteur magnétique de position selon la revendication 6 ou selon la revendication 7 caractérisé en ce que le boîtier de surmoulage du stator (6, 7) présente une gorge pour la mise en place de l'aimant (5) permanent et de la culasse en matériau magnétique doux extérieur, et se prolonge par une partie annulaire extérieure coaxiale, d'un diamètre intérieur au moins égal au diamètre extérieur de ladite culasse, ladite partie tubulaire étant prolongée par au moins une patte de fixation.

8. Capteur magnétique de position selon la revendication 8 caractérisé en ce que le boîtier présente une cavité pour le logement d'une sonde de Hall (9) dans l'entrefer secondaire (8), le boîtier présentant à sa partie frontale arrière un logement pour un circuit électronique de traitement des signaux générés par la sonde de Hall (9).

9. Capteur magnétique de position selon l'une quelconque des revendications précédentes caractérisé en ce que la longueur de l'aimant permanent (5) est inférieure à la longueur du stator (6, 7) d'une valeur comprise entre E et 2E, E désignant la largeur de l'entrefer principal.

10. Circuit électronique de traitement du signal délivré par la sonde de Hall (30) d'un capteur conforme à l'une quelconque des revendications précédentes caractérisé en ce que le moyen de correction de température est constitué par une diode au silicium (33) disposée à l'entrée d'un amplificateur opérationnel (34) qui commande en courant la sonde de Hall (30), la tension à l'entrée non inverseuse du premier amplificateur (34) étant fixée par deux résistances (35, 36) en série donnant une tension de référence, la tension sur l'entrée inverseuse étant donnée par une résistance (37) en série avec la diode (33).

## Patentansprüche

1. Magnetischer Positionsgeber des Typs, der einen dünnen, rohrförmigen, radial magnetisierten, fest mit einer Koppelachse verbundenen Permanentmagneten (5) umfaßt, wobei der Permanentmagnet (5) drehbeweglich in einem zylindrischen Haupt-Luftspalt angeordnet ist, der von einem Joch (2) und einem Stator aus einem weichmagnetischen Material bestimmt ist, wobei der Stator (6, 7) einen Sekundär-Luftspalt (8, 16) aufweist, in dessen Innerem eine Hall-Sonde (9) angeordnet ist, dadurch gekennzeichnet, daß der Stator koaxial im Inneren des Permanentmagneten (5) angeordnet ist und daß das Joch (2), das die Geschlossenheit des von dem Permanentmagneten erzeugten magnetischen Flusses sicherstellt, von einem rohrförmigen, zum Magneten (5) und zum Stator (6, 7) koaxialen Bauteil gebildet ist.

2. Magnetischer Positionsgeber nach Anspruch 1, dadurch gekennzeichnet, daß der Permanentmagnet (5) fest mit dem Joch (2) verbunden ist, wobei das Joch (2) fest mit der Koppelachse verbunden ist.

3. Magnetischer Positionsgeber nach Anspruch 1 oder 2, dadurch gekennzeichnet, daß das Joch (2) eine innere Oberfläche aufweist, die sich mit der Gesamtheit der äußeren Oberfläche des Permanentmagneten (5) in Kontakt befindet, wobei der rohrförmige Abschnitt zur Verbindung mit der Koppelachse mit einem quer angeordneten Flansch verbunden ist.

4. Magnetischer Positionsgeber nach Anspruch 3, dadurch gekennzeichnet, daß der Permanentmagnet (5) mit dem Joch (2) verklebt ist.

5. Magnetischer Positionsgeber nach einem der Ansprüche 1 bis 4, dadurch gekennzeichnet, daß der Stator (6, 7) aus zwei dachziegelförmigen Bauteilen aus einem weichmagnetischen Material besteht, die wenigstens zwei Ausnehmungen zur Positionierung in dem feststehenden Gehäuse aufweisen.

6. Magnetischer Positionsgeber nach einem der vorhergehenden Ansprüche, dadurch gekennzeichnet, daß der Stator (6, 7) in einem feststehenden Gehäuse eingeformt ist, das eine Axialbohrung aufweist, die ein Lager für die Koppelachse bildet.

7. Magnetischer Positionsgeber nach Anspruch 5 oder 6, dadurch gekennzeichnet, daß das Gehäuse, in dem der Stator (6, 7) eingeformt ist, eine Ausnehmung zur Aufnahme des Permanentmagneten (5) und des äußeren Joches aus weichmagnetischem Material aufweist und sich in einem koaxialen äußeren Ringabschnitt fortsetzt, dessen Innendurchmesser wenigstens gleich dem Außendurchmesser des Joches ist, wobei sich der Ringabschnitt in wenigstens einer Befestigungslasche fortsetzt.

8. Magnetischer Positionsgeber nach Anspruch 7, dadurch gekennzeichnet, daß das Gehäuse eine Ausnehmung zur Aufnahme einer Hall-Sonde (9) in dem Sekundär-Luftspalt (8) aufweist, wobei das Gehäuse an seiner hinteren Stirnseite einen Sitz für einen elektronischen Schaltkreis zur Verarbeitung der von der Hall-Sonde (9) erzeugten Signale aufweist.

9. Magnetischer Positionsgeber nach einem der.vorhergehenden Ansprüche, dadurch gekennzeichnet, daß die Länge des Permanentmagneten (5) um einen Wert E bis 2E geringer ist als die Länge des Stators (6, 7), wobei E die Breite des Haupt-Luftspaltes bezeichnet.

10. Elektronischer Schaltkreis zur Verarbeitung der von der Hall-Sonde (30) eines magnetischen Positionsgebers nach einem der vorhergehenden Ansprüche erzeugten Signale, dadurch gekennzeichnet, daß das Mittel zur Temperaturkorrektur von einer Silizium-Diode (33) gebildet ist, die am Eingang eines Operationsverstärkers (34) angeordnet ist, der die Hall-Sonde (30) über den Strom steuert, wobei die Spannung am nicht invertierenden Eingang des ersten Verstärkers (34) zur Vorgabe einer Bezugsspannung durch zwei in Reihe geschaltete Widerstände (35, 36) festgelegt ist und wobei die Spannung am invertierenden Eingang durch einen Widerstand (37) gegeben ist, der in Reihe mit der Diode (33) geschaltet ist.

## Claims

1. Magnetic position sensor of the type including a radially magnetised thin permanent magnet (5) of tubular form, firmly attached to a linking spindle, the said permanent magnet (5) being rotationally mobile within a main cylindrical air-gap defined by a yoke (2) and a stator made of a soft magnetic material, the stator (6, 7) having a secondary air-gap (8, 16) within which a Hall probe (9) is arranged characterised by the fact that the stator is arranged co-axially within the permanent magnet (5), and by the fact that the yoke (2) closing the magnetic flux generated by the permanent magnet is formed by a tubular piece co-axial with the magnet (5) and the rotor (6, 17).

2. Magnetic position sensor as described in claim 1, characterised by the fact that the permanent magnet (5) is firmly attached to the yoke (2), the said yoke (2) being firmly attached to the linking spindle.

3. Magnetic position sensor as described in claim 1 or claim 2, characterised by the fact that the yoke (2) has an inner surface in contact with the whole of the outer surface of the permanent magnet (5), the said tubular piece being joined to a side plate for connection to the linking spindle.

4. Magnetic position sensor as described in claim 3, characterised by the fact that the permanent magnet (5) is adhered in the yoke (2).

5. Magnetic position sensor as described in any one of claims 1 to 4, characterised by the fact that the stator (6, 7) consists of two pieces made of a soft magnetic material in tile form having at least two cavities for location in a fixed case.

6. Magnetic position sensor as described in any one of the preceding claims, characterised by the fact that the stator (6, 7) is moulded in a fixed case having an axial bore forming a bearing for the linking spindle.

7. Magnetic position sensor as described in claim 6 or in claim 7, characterised by the fact that the moulding case of the stator (6, 7) has a groove for location of the permanent magnet (5) and of the external yoke of soft magnetic material, and is extended by a coaxial outer annular part, having an internal diameter at least equal to the external diameter of the said yoke, the said tubular part being extended by at least one fixing flange.

8. Magnetic position sensor as described in claim 8, characterised by the fact that the case has a cavity to house a Hall probe (9) in the secondary air-gap (8), the case having in its rear end part a housing for an electronic circuit for processing the signals generated by the Hall probe (9).

9. Magnetic position sensor as described in any one of the preceding claims, characterised by the fact that the length of the permanent magnet (5) is less than the length of the stator (6, 7) by a value of between E and 2E, E being the width of the main air-gap.

10. Electronic circuit for processing the signal produced by the Hall probe (30) of a sensor as described in any one of the preceding claims, characterised by the fact that the temperature correction means consists of a silicon diode (33) arranged at the input of an operational amplifier (34) which controls the current to the Hall probe (30), the voltage at the non-inverting input of the first amplifier (34) being fixed by two resistors (35, 36) in series giving a reference voltage, the voltage at the inverting input being given by a resistor (37) in series with the diode (33).
